Europäisches Patentamt

European Patent Office

Office européen des brevets

(11) Veröffentlichungsnummer : **0 089 633**
**B1**

## (12) EUROPÄISCHE PATENTSCHRIFT

(45) Veröffentlichungstag der Patentschrift :
28.08.85

(21) Anmeldenummer : 83102665.3

(22) Anmeldetag : 17.03.83

(51) Int. Cl.⁴ : **B 41 J 11/00**, B 41 J 15/00

(54) Vorrichtung zum lösbaren Befestigen von Gestängen in Stützplatinen.

(30) Priorität : 19.03.82 DE 3210024

(43) Veröffentlichungstag der Anmeldung :
28.09.83 Patentblatt 83/39

(45) Bekanntmachung des Hinweises auf die Patenterteilung : 28.08.85 Patentblatt 85/35

(84) Benannte Vertragsstaaten :
FR GB IT NL

(56) Entgegenhaltungen :
DE-A- 2 655 053
DE-A- 3 008 540
DE-C- 2 826 393
US-A- 4 014 426

(73) Patentinhaber : Siemens Aktiengesellschaft
Berlin und München Wittelsbacherplatz 2
D-8000 München 2 (DE)

(72) Erfinder : Kusmierz, Hans, Dipl.-Ing.
Neubruchweg 18
D-8031 Gilching (DE)

## Beschreibung

Die Erfindung betrifft eine Vorrichtung gemäß dem Oberbegriff des Patentanspruches 1.

Eine Vorrichtung der eingangs genannten Art ist der aus DE-PS 28 26 393 bekannt. Dabei handelt es sich um eine Vorrichtung zum Befestigen eines auf einem Datendrucker o. dgl. aufsetzbaren Formularvorschubs. Die Vorrichtung weist Stützplatinen mit einseitig offenen Lageröffnungen zur Aufnahme eines Gestänges auf, wobei zur Sicherung des Gestänges ein Sicherungshebel verwendet wird, der in einer ersten Endlage das Einfügen des Gestänges in die Stützplatine ermöglicht und in einer zweiten Endlage das Gestänge sichert.

Es ist weiters aus der DE-OS 30 08 540 eine Vorrichtung am Papierträger von Schreib- oder ähnlichen Maschinen bekannt, die einen Lagermechanismus aufweist, der zum Verstellen der relativen Lage des eigentlichen Papierträgers gegenüber einem Gehäusegestell besteht. Der Lagermechanismus enthält einen Verstellhebel, der mit einer Lagerbuchse fest verbunden ist. Die Lagerbuchse weist eine exzentrische Bohrung auf, die in einseitig offene Lageröffnungen des Gestelles eingreift. Zusätzlich noch ist an der Lagerbuchse ein Sicherungshebel ausgebildet, der es ermöglicht die Lagerbuchse zwischen einer Vielzahl von Positionen zu verrasten.

Aufgabe der Erfindung ist es eine einfach herstellbare einstückige Vorrichtung zum lösbaren Befestigen von Gestängen in Stützplatinen bereitzustellen, die es ermöglicht, das Gestänge in den Stützplatinen ohne Werkzeug und ohne zusätzliche Vorrichtungen an den Stützplatinen senkrecht zur Achsrichtung des Gestänges sicher zu montieren.

Die Aufgabe wird bei einer Vorrichtung der eingangs genannten Art gemäß dem kennzeichnenden Teil des ersten Patentanspruches gelöst.

Weitere vorteilhafte Ausführungsformen der Erfindung sind in den Unteransprüchen gekennzeichnet.

Bei der Erfindung wird in vorteilhafter Weise zur Sicherung eines Gestänges, nämlich den Achsen eines Papiertraktors, auf die Achsen eine einfach ausgebildete einstückige Lager- und Sicherungsvorrichtung aufgeschoben. Diese besteht aus einer Lagerbuchse, die einseitig abgeflacht ist und die mit einer einseitig offenen Lageröffnung auf der Stützplatine zusammenarbeitet.

An der Lagerbuchse selbst, und mit der Lagerbuchse einstückig verbunden ist ein zeigerartiger Sicherungshebel der elastisch ausgebildet ist und an seinem Ende eine Sicherungsvorrichtung in Form einer Rastvorrichtung trägt. Die Rastvorrichtung selbst besteht dabei aus einer Rastnase mit zugehöriger Rastmulde, die alternativ entweder auf dem Sicherungshebel oder auf der Stützplatine selbst angeordnet sind.

Die Lagervorrichtung selbst ist dabei so ausgestaltet, daß sie an beiden Seiten des zu lagernden Gestänges ohne Änderung verwendet werden kann, was die Herstellung wesentlich erleichtert.

Die Lagervorrichtung läßt sich einstückig aus einem einzigen Kunststoffspritzteil ausbilden.

Eine Ausführungsform der Erfindung ist in den Zeichnungen dargestellt und wird im folgenden beispielsweise näher beschrieben.

Es zeigen :

Figur 1 eine schematische Darstellung eines über die erfindungsgemäße Vorrichtung in einem Druckergehäuse befestigten Papiertraktors für Endlospapier,

Figur 2 eine schematische Darstellung einer Verriegelungsvorrichtung von der Seite und

Figur 3 eine Schnittdarstellung der Verriegelungsvorrichtung.

In einer hier nur schematisch dargestellten Druckeinrichtung zum Bedrucken von Endlosformular erfolgt der Transport des Endlosformulares über einen Traktorenantrieb 1. Dieser Traktorenantrieb 1 ist in Stützplatinen 2 des Druckergehäuses gelagert. Zu diesem Zweck weisen die Stützplatinen 2 einseitig offene Lageröffnungen 3 auf. Eine Seite der Lageröffnung ist flanschartig nach außen verlängert und weist eine Rastöffnung 4 auf. Als Lager für die Achsen und Wellen 5 des Traktorenantriebes dient eine beidseitig abgeflachte Lagerbuchse 6 mit einer der Öffnungsweite 7 der Lageröffnung entsprechenden Breite. Selbstverständlich ist es jedoch auch möglich, nur eine einseitig abgeflachte Lagerbuchse 6 zu verwenden. Mit der Lagerbuchse 6 verbunden ist ein Sicherungshebel 8 mit an dem Sicherungshebel angeordneter Rastnase 9.

Zur Verhinderung einer axialen Verschiebung des Gestänges 5 befindet sich in der Durchgangsöffnung 10 der Lagerbuchse 6 eine Sicherungsrippe 11, die in eine Nut 12 des Gestänges 5 eingreift. Weiter weist die Lagerbuchse einen flanschartigen Sicherungsansatz 13 auf, der im zusammengebauten und verrasteten Zustand ein axiales Verschieben der Lagerbuchse 6 verhindert.

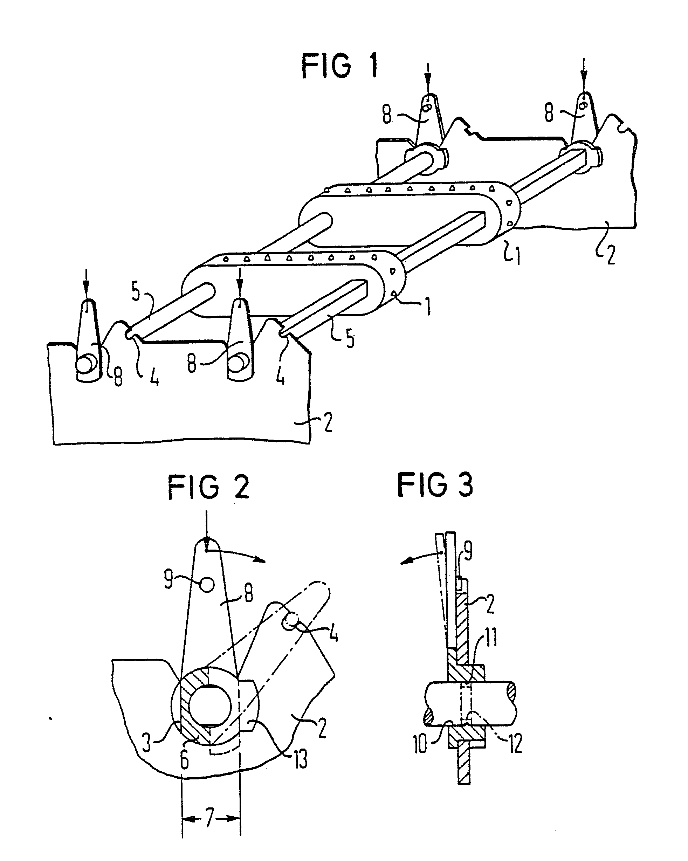

Um entsprechend der Darstellung der Fig. 1 den Traktorenantrieb 1 mit den Stützplatinen 2 zu verbinden, wird vor dem eigentlichen Zusammenbau auf das Gestänge 5 der Sicherungshebel 8 mit der Lagerbuchse 6 aufgesteckt. In senkrechter Position des in seinem oberen Teil als Bedienhebel ausgebildeten Sicherungshebels 8 läßt sich die Lagerbuchse, bedingt durch ihre seitliche Abflachung, in die Lageröffnung 3 einführen. Durch Verdrehen der Lagerbuchse 6 über den Sicherungshebel 8 und dem nachfolgenden Verrasten des Sichererungshebels 8 über die Rastnase 9 in der Rastöffnung 4 wird der Traktorenantrieb über sein Gestänge 5 formflüssig in den Stützplatinen 2 gehalten. Zum Verrasten wird dabei entsprechend der Darstellung der Fig. 3 der Sicherungshebel 8 entsprechend dem Pfeil be-

wegt. In der Fig. 2 entspricht die senkrechte Position des Sicherungshebels 8 (durchgezogene Linie) der Montageposition und die verdrehte, durch gestrichelte Linien dargestellte Position der Verriegelungsposition des Sicherungshebels 8.

Selbstverständlich ist es auch möglich, bei der Rastvorrichtung die Rastnase 9 auf der Stützplatine 2 und die Rastöffnung auf dem Sicherungshebel 8 anzuordnen.

Bei einer vorteilhaften Ausführungsform besteht der Sicherungshebel 8 und die Kunststoffbuchse 6 aus einem gemeinsamen Kunststoffspritzteil.

## Patentansprüche

1. Vorrichtung zum lösbaren Befestigen von Gestängen (5) in einseitig offene Lageröffnungen (3) aufweisende Stützplatinen (2), insbesondere für achsgelagerte Baugruppen für den Aufzeichnungsträgertransport in Druckeinrichtungen unter Einsatzes eines Sicherungshebels (8) mit einer ersten Endlage zum Lösen des Gestänges (5) und einer zweiten Endlage, gegenüber der ersten Endlage verdrehten Endlage zum formschlüssigen Sichern des Gestänges (5), dadurchgekennzeichnet, daß eine das Gestänge (5) tragende, mindestens an einer Seite entsprechend der Öffnungsweite (7) der Lageröffnung (3) abgeflachte, an einem Befestigungsende des Gestänges angebrachte, Lagerbuchse (6) vorgesehen ist, daß der mit der Lagerbuchse (6) fest verbundene, senkrecht zum Gestänge angeordnet, zeigerartig verlaufende Sicherungshebel (8) seitlich auslenkbar ist und eine im Abstand zur Lagerbuchse (8) mit der Stützplatine (2) zusammenarbeitende Rastvorrichtung (4, 9) aufweist, die aus einer Rastnase (9) mit zugehöriger Rastmulde (4) besteht, die alternativ auf dem Sicherungshebel (8) und auf der Stützplatine (2) angeordnet sind, und daß die axiale Verschiebung des Gestänges (5) verhindernde formschlüssige Sicherungsmittel (11, 12, 13) vorgesehen sind.

2. Vorrichtung nach Anspruch 1, dadurch gekennzeichnet, daß der Sicherungshebel (8) und die Lagerbuchse (6) aus einem gemeinsamen Kunststoffspritzteil bestehen.

3. Vorrichtung nach einem der Ansprüche 1 oder 2, dadurch gekennzeichnet, daß die Lagerbuchse (6) im Bereich der Aufnahmeöffnung für das Gestänge (5), in Nuten (12) des Gestänges (5) eingreifende und dadurch das Gestänge (5) in axialer Richtung sichernde Sicherungsrippen (11) aufweist und daß die Lagerbuchse (6) einen flanschartigen Sicherungsansatz (13) aufweist.

## Claims

1. A device for detachably securing rods (5) to support plates (2) having bearing openings (3) which are open at one side, in particular for axle-mounted assemblies for data carrier transport in printing devices, employing a safety lever (8) with a first end position for detaching the rods (5) and a second end position, which is staggered relative to the first end position, for securing the rods (5) in a form-locking manner, characterised in that there is provided a bearing bush (6) which supports the rods (5) and is flattened at least on one side in accordance with the opening width (7) of the bearing opening and is attached to a fastening end of the rods ; that the safety lever (8), which is fixedly connected to the bearing bush (6) and is arranged at right angles to the rods and extends in the manner of a pointer, is laterally deflectable and has a locking device (4, 9) which interacts with the support plate (2) at a distance from the bearing bush (8), which locking device consists of a locking nose (9) with an accompanying locking recess (4) which are alternatively arranged on the safety lever (8) and on the support plate (2) ; and that there are provided form-locking safety means (11, 12, 13) which prevent the axial displacement of the rods (5).

2. A device as claimed in Claim 1, characterised in that the safety lever (8) and the bearing bush (6) consist of a common injection-moulded plastics part.

3. A device as claimed in one of Claims 1 or 2, characterised in that in the region of the receiving opening for the rods (5), the bearing bush (6) has safety ribs (11) which engage into grooves (12) in the rods (5) and thus secure the rods (5) in the axial direction ; and that the bearing bush (6) has a flange-like safety attachment (13).

## Revendications

1. Dispositif pour fixer d'une manière détachable des tiges (5) dans des platines de support (2) comportant des ouvertures formant paliers (3) ouvertes d'un côté, notamment pour des modules supportés au niveau de leur axe pour le transport de supports d'enregistrement dans des dispositifs d'impression, moyennant l'utilisation d'un levier de blocage (8) comportant une première position d'extrémité permettant le dégagement de la tige (5) et une seconde position d'extrémité décalée par rapport à la première position d'extrémité et servant à réaliser le blocage par formes complémentaires de la tige (5), caractérisé par le fait qu'il est prévu un coussinet (6) portant la tige (5) et aplati au moins sur une face conformément à la largeur (7) de l'ouverture formant palier (3) et montée sur une extrémité de fixation de la tige, que le levier de blocage (8), disposé à la manière d'une aiguille perpendiculairement à la tige et relié rigidement au coussinet (6), peut être pivoté latéralement et comporte un dispositif d'encliquetage (4, 9) coopérant à distance du coussinet (8) avec la platine de support (2) et qui est constitué par un ergot d'encliquetage (9) et un évidement associé d'encliquetage (4), qui sont disposés l'un sur le levier de blocage (8) et l'autre sur la platine de support (2), et qu'il est prévu des moyens de blocage selon une liaison par formes complémentaires (11, 12, 13) empêchant le décalage axial de la tige (5).

2. Dispositif suivant la revendication 1, caractérisé par le fait que le levier de blocage (8) et le coussinet (6) sont constitués par une seule pièce en matière plastique moulée par injection.

3. Dispositif suivant l'une des revendications 1 ou 2, caractérisé par le fait que le coussinet (6) comporte, dans la zone de l'ouverture de réception prévue pour la tige (5), des nervures de blocage (11) s'engageant dans des rainures (12) de la tige (5) et bloquant de ce fait cette dernière suivant la direction axiale, et que le coussinet (6) comporte un appendice saillant (13) de blocage en forme de bride.

0 089 633

FIG 1

FIG 2

FIG 3